# EUROPÄISCHE PATENTSCHRIFT

(11) **EP 3 341 263 B1**
(45) Veröffentlichungstag und Bekanntmachung des Hinweises auf die Patenterteilung: **22.05.2019**
(21) Anmeldenummer: 16748305.6
(22) Anmeldetag: 09.08.2016
(51) Int. Cl.: B62D 1/184, B62D 1/19

(54) **KLEMMVORRICHTUNG EINER VERSTELLBAREN LENKSÄULE FÜR KRAFTFAHRZEUGE**
CLAMPING DEVICE OF AN ADJUSTABLE STEERING COLUMN FOR MOTOR VEHICLES
DISPOSITIF DE BLOCAGE D'UNE COLONNE DE DIRECTION RÉGLABLE DE VÉHICULE AUTOMOBILE

(30) Priorität: 28.08.2015 DE 102015216536
(43) Veröffentlichungstag der Anmeldung: 04.07.2018
(73) Patentinhaber: ThyssenKrupp Presta AG, 9492 Eschen (LI); thyssenkrupp AG, 45143 Essen (DE)
(72) Erfinder: HUBER, Sebastian, 6811 Göfis (AT)
(74) Vertreter: thyssenkrupp Intellectual Property GmbH
(86) Internationale Anmeldenummer: PCT/EP2016/068969
(87) Internationale Veröffentlichungsnummer: WO 2017/036748

(56) Entgegenhaltungen:
- WO-A1-2016/074838
- DE-A1-102011 056 351
- US-A1- 2011 185 839

## Beschreibung

Die Erfindung betrifft eine Klemmvorrichtung einer verstellbaren Lenksäule für Kraftfahrzeuge, bei der ein mit dem Fahrzeugchassis fest verbundener Träger mit zwei die Lenksäule umfassenden Klemmbacken verbunden ist, zwischen denen ein längs und/oder vertikal verstellbares, eine Lenkspindel drehbar lagerndes Mantelrohr an der Lenksäule festklemmbar ist, mit einem die beiden Klemmbacken verbindenden Klemmbolzen, der mit einer an mindestens einem der beiden Klemmbacken angeordneten Zuspannvorrichtung derart zusammenwirkt, dass bei einer Drehung des Klemmbolzens um die Bolzenachse in Schließrichtung die Zuspannvorrichtung das Mantelrohr zwischen den beiden Klemmbacken eingeklemmt und bei einer Drehung in Öffnungsrichtung die Klemmbacken freigibt, sodass das Mantelrohr verstellbar ist.

Bei derartigen Klemmvorrichtungen tritt das Problem auf, dass ein mit dem Klemmbolzen drehfest verbundener Betätigungshebel bei einer Bewegung in Schließrichtung die für das Zuspannen der Klemmbacken erforderliche Kraft aufbringen muss. Bei einer Bewegung des Klemmhebels in Öffnungsrichtung wirken die genannten Kräfte in umgekehrter Richtung auf den Betätigungshebel ein, welcher sich daher aus dem Griff der Bedienperson befreien und gegen einen Anschlag in Öffnungsrichtung prallen kann. Dadurch wird die Lebensdauer der Klemmvorrichtung verringert und es entstehen Geräusche, die als unangenehm empfunden werden.

Zur Vermeidung des genannten Problems sind Dämpfungsvorrichtungen bekannt, die die Bewegung des Betätigungshebels aus der Schließstellung in die Öffnungsstellung dämpfen und Störgeräusche vermeiden.

Aus der EP 2 738 062 A2 ist eine Dämpfungsvorrichtung bekannt, bei der einen Nockenkörper, der auf einem Klemmbolzen angeordnet ist, eine Gewichtsausgleichsfeder der Lenksäule während der Überführung in die geöffnete Hebelstellung weiter vorspannt und somit eine Dämpfung realisiert. Nachteil dieser Lösung ist, dass die Dämpfung von der Höhenverstellposition abhängig ist, denn die Gewichtsausgleichsfeder ist in verschiedenen Höhenverstellpositionen unterschiedlich stark vorgespannt.

Aus der DE 20 2012 102 159 U1 ist eine Dämpfungsvorrichtung mit Flüssigkeitsdämpfer bekannt. Nachteilig daran ist der komplexe Aufbau und der Flüssigkeitseinsatz.

In US2011/185839 A1 wird eine gattungsgemäße Klemmvorrichtung offenbart.

Aufgabe der Erfindung ist es, eine verbesserte Dämpfungsvorrichtung für eine Klemmvorrichtung einer Lenksäule anzugeben, die einen einfachen und kostengünstigen Aufbau aufweist.

Die erfindungsgemäße Lösung besteht darin, dass auf dem Klemmbolzen ein Dämpfungskörper angeordnet und mit dem Klemmbolzen reibschlüssig oder elastisch verbunden ist und dass der Dämpfungskörper eine radial vom Klemmbolzen abstehende Anschlagzunge aufweist, die bei einer Drehung des Klemmbolzens in Öffnungsrichtung in Anlage mit dem Mantelrohr oder einem anderen Teil der Lenksäule kommt und eine Drehung des Dämpfungskörpers verhindert, sodass die Drehung des Klemmbolzen in Öffnungsrichtung gegen die Reibkraft oder elastische Kraft erfolgt und gedämpft wird.

Die erfindungsgemäße Klemmvorrichtung hat den Vorteil, dass sie einerseits unabhängig von der Verstellposition der Lenksäule ist und außerdem einen einfachen und kostengünstigen Aufbau aufweist. Im einfachsten Fall besitzt der Dämpfungskörper eine Bohrung, durch die der Klemmbolzen hindurchgeht, wobei der Durchmesser der Bohrung und des Klemmbolzens derart aufeinander abgestimmt sind, dass bei einer relativen Drehung des Klemmbolzens gegenüber dem Dämpfungskörper eine definierte Reibungskraft überwunden werden muss. Durch die Reibung wird die von den Klemmbacken während des Öffnungsvorgangs freigesetzte elastische Energie, die zu einer Beschleunigung der Drehbewegung des Klemmbolzens in Öffnungsrichtung und des mit dem Klemmbolzen verbundenen Betätigungshebels führt, durch Reibung des Klemmbolzens am Dämpfungskörper absorbiert, sodass die Bewegung gebremst wird und der Betätigungshebel mit sehr geringer Geschwindigkeit an seinen Anschlag gelangt. Dadurch werden unangenehme Geräusche genauso verhindert wie ein vorzeitiger Verschleiß der Klemmvorrichtung.

In einer vorteilhaften Ausführungsform umfasst der Dämpfungskörper eine Kunststoff oder ein Elastomer. Bevorzugt ist der Dämpfungskörper vollständig aus dem Kunststoff oder dem Elastomer gebildet. Dies bietet den Vorteil, dass eine verbesserte Dämpfung erreicht werden kann.

In Ausgestaltung des Erfindungsgedankens ist vorgesehen, dass die elastische Verbindung zwischen Dämpfungskörper und Klemmbolzen durch eine elastische Verformung des Dämpfungskörpers zustande kommt. Wenn der Dämpfungskörper selbst elastisch verformt wird, benötigt man keine für diesen Zweck vorgesehene zusätzlichen Bauteile.

In einer ersten Ausführungsvariante der genannten Ausführungsform ist die elastische Verformung eine Verformung der Anschlagzunge. Die vom Klemmbolzen radial abstehende Anschlagzunge kann für diesen Zweck aus relativ dünnem Material geformt sein, sodass sie sich zunächst an das Mantelrohr anlegt und bei einer weiteren Drehung des Klemmbolzens und des Dämpfungskörpers verbiegt, wodurch sie auf den Klemmbolzen ein Drehmoment entgegen der Öffnungsdrehrichtung ausübt.

In einer zweiten Variante des oben genannten Ausführungsbeispiels kann die elastische Verformung auch durch Aufweiten eines den Klemmbolzen teilweise umschließenden Bereichs des Dämpfungskörpers, insbesondere durch einen Nocken des Klemmbolzens erzielt werden. Dabei ist grundsätzlich jede Querschnittsform des Bolzen, die von der kreisrunden Form abweicht in Verbindung mit einer entsprechend geformten Gegenfläche des Dämpfungskörpers geeignet.

In einer besonders bevorzugten Ausführungsform kann die erfindungsgemäße Klemmvorrichtung außer der Dämpfungswirkung noch eine weitere Funktion erfüllen. Hierzu dient die Merkmalskombination, dass das Mantelrohr mit einem festen Längsanschlag versehen ist und dass der Dämpfungskörper am Ende seiner Anschlagszunge eine Anschlagfläche aufweist, die bei geöffneter Zuspannvorrichtung dem Längsanschlag gegenüberliegt, so dass eine Längsverschiebung des Mantelrohrs zur Fahrzeugfront hin durch Anschlag der Anschlagfläche am Längsanschlag begrenzt ist, und die bei geschlossener Zuspannvorrichtung oberhalb des Längsanschlag liegt, sodass bei einem Unfall des Kraftfahrzeugs das Mantelrohr unter Überwindung der Reibungskraft der Klemmbacken in Richtung Fahrzeugfront über den Längsanschlag hinaus verschiebbar ist.Bei dieser Ausführungsform übernimmt die ohnehin vorhandene Anschlagzunge des Dämpfungskörpers zusammen mit einem am Mantelrohr befestigten Längsanschlag die Funktion einer ein- und ausschaltbaren Begrenzung der Längsverstellung, welche im Fall der absichtlichen Längsverstellung durch den Fahrer bei geöffneter Zuspannvorrichtung wirksam ist und bei geschlossener Zuspannvorrichtung ausgeschaltet bleibt, um eine weitere Verschiebung der Lenksäule über den normalen Verstellbereich in Längsrichtung hinaus zu ermöglichen, wenn es zu einem Unfall kommt. Zuspannvorrichtungen sind aus dem Stand der Technik hinreichend bekannt, beispielsweise als Keilscheibe-Nockenscheibe-Zuspannvorrichtung, bei der eine mit dem Betätigungshebel verbundene Nockenscheibe gegenüber einer nicht verdrehbaren Keilscheibe verdreht wird, wodurch ein Klemmhub das Zuspannen der Klemmbacken bewirkt. Weiterhin sind aus dem Stand der Technik Kippstift-Zuspannvorrichtungen und Kugel- bzw. Rollenzuspannvorrichtungen bekannt. Diese beispielhafte Auflistung der Zuspannvorrichtungen ist jedoch nicht als Eingrenzung auf eine Art von Zuspannvorrichtungen zu verstehen. Die erfindungsgemäße Lösung ist somit nicht auf die genannten Zuspannvorrichtungen beschränkt.

Um eine Drehung des Dämpfungskörpers zusammen mit dem Klemmbolzen über einen kleinen Drehwinkelbereich, der für das Abschalten der Begrenzung der Längsverstellung erforderlich ist, zu ermöglichen und eine weitere Drehung des Dämpfungskörpers zu verhindern, auch wenn sich der Klemmbolzen weiter in Schließrichtung dreht, ist eine weitere Ausgestaltung der Erfindung vorgesehen, bei der der Dämpfungskörper ein Federelement aufweist, welches vom Klemmbolzen radial in einer der Anschlagzunge entgegengesetzten Richtung absteht und an dem Mantelrohr oder einem anderen Teil der Lenksäule anliegt, sodass bei einer Drehung des Klemmbolzens in Schließrichtung die Drehbewegung des Dämpfungskörpers derart begrenzt ist, dass die Anschlagfläche der Anschlagzunge außerhalb des Wirkbereichs des Längsanschlags liegt. In einer vorteilhaften Weiterbildung kann das Federelement und der Dämpfungskörper als integrales einstückiges Bauteil, bevorzugt aus Kunststoff, ausgebildet sein.

Die letztgenannte Ausführungsform der Erfindung mit schaltbarer Begrenzung der Längsverstellung der Lenksäule kann noch verbessert werden durch die Maßnahme, dass die elastische Deformation des Dämpfungskörpers eine Vergrößerung des Abstandes zwischen Bolzenachse und Anschlagfläche der Anschlagzunge bewirkt. Diese Maßnahme hat den Vorteil, dass die Anschlagfläche der Anschlagzunge beim Schließen der Zuspannvorrichtung immer zuerst eine kleine Wegstrecke vom Längsanschlag weg in Richtung Bolzenachse bewegt wird, bevor sich die Anschlagfläche zusammen mit dem Dämpfungskörper und dem Klemmbolzen dreht, wobei die Anschlagfläche sich nach oben aus dem Bereich des Längsanschlags heraus bewegt. Wird die Zuspannvorrichtung danach wieder geöffnet, bewegt sich die Anschlagfläche durch die Drehung des Dämpfungskörpers mit dem Klemmbolzen zunächst nach unten in den Bereich des Längsanschlags hinein und bei einer weiteren Drehung des Klemmbolzens in Öffnungsrichtung wird der Dämpfungskörper an einer Weiterdrehung gehindert und deformiert sich elastisch, wodurch der Abstand zwischen Anschlagfläche und Bolzenachse wieder vergrößert wird, bis die Anschlagfläche im Extremfall wieder an den Längsanschlag anliegt. Ohne die Verkürzung des Abstandes zwischen Bolzenachse und Anschlagfläche bei der Schließung der Zuspannvorrichtung könnte das Ende der Anschlagzunge beim Öffnen der Zuspannvorrichtung auf dem Längsanschlag zu liegen kommen, sodass auch die Anschlagfläche oberhalb des Längsanschlags liegt und damit eine Begrenzung des Verstellwegs in Längsrichtung nicht mehr gegeben ist.

Eine einfache Ausgestaltungsform der erfindungsgemäßen elastischen Deformation des Dämpfungskörpers besteht darin, dass die Anschlagzunge vom Bereich des Klemmbolzens ausgehend in Richtung auf das Mantelrohr hin gebogen ist und dass bei Anlage der Anschlagzunge am Mantelrohr und weiterer Drehung des Klemmbolzens in Öffnungsrichtung die Anschlagzunge aufgebogen wird, sodass sich der Abstand der Anschlagfläche von der Bolzenachse vergrößert. Ausführungsbeispiele der Erfindung werden nachfolgend anhand der Zeichnungen näher erläutert. Die Figuren zeigen im Einzelnen:
- Figur 1:: eine verstellbare Lenksäule für Kraftfahrzeuge mit einer erfindungsgemäßen Klemmvorrichtung im geschlossenen Zustand;
- Figur 2:: dieselbe Lenksäule mit Klemmvorrichtung im geöffneten Zustand;
- Figur 3:: eine Lenksäule wie in den Figuren 1 und 2 im Längsschnitt;
- Figur 4:: eine Detailansicht mit erfindungsgemäßem Dämpfungskörper einer Klemmvorrichtung im geöffneten Zustand;
- Figur 5:: wie Figur 4 im geschlossenen Zustand;
- Figur 6:: eine weitere Ausführungsform eines erfindungsgemäßen Dämpfungskörpers einer Klemmvorrichtung im geöffneten Zustand;
- Figur 7:: wie Figur 6 im geschlossenen Zustand;
- Figur 8:: ein erfindungsgemäßer Dämpfungskörper einer Klemmvorrichtung mit Längsanschlag im geöffneten Zustand;
- Figur 9:: wie Figur 8 aber im Übergangsstadium zwischen geöffneten und geschlossenen Zustand;
- Figur 10:: wie Figur 8, aber im geschlossenen Zustand.

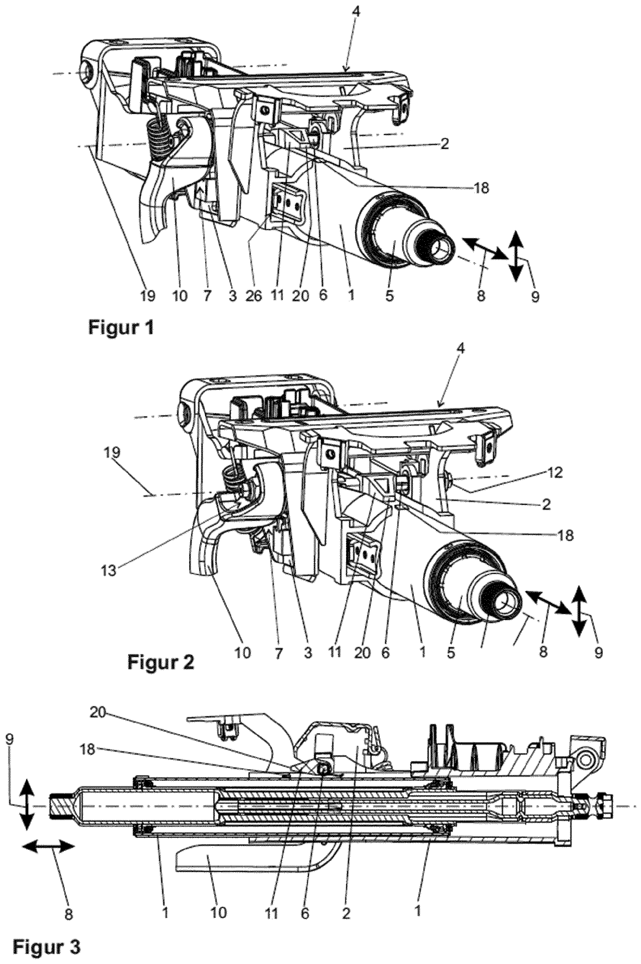

Wie man in den Figuren 1 und 2 erkennt, wird die gezeigte Lenksäule am nicht gezeigten Fahrzeugchassis mittels eines Trägers 4 befestigt, welcher auch zwei Klemmbacken 2, 3 trägt, die mittels der erfindungsgemäßen Klemmvorrichtung zusammengeklemmt werden können. Festgeklemmt wird dabei ein Mantelrohr 1, welches eine mehrteilige, in Längsrichtung 8 teleskopisch auseinander und ineinander fahrbare Lenkspindel 5 drehbar lagert. Das Mantelrohr 1 selbst kann bei geöffneter Klemmvorrichtung ebenfalls in Längsrichtung 8 vor und zurück geschoben werden. Des Weiteren kann das Mantelrohr 1 bei geöffneter Klemmvorrichtung in Vertikalrichtung 9 nach oben und unten bewegt werden. Wenn das Mantelrohr 1 mittels der erfindungsgemäßen Klemmvorrichtung zwischen den Klemmbacken 2, 3 festgeklemmt ist, kann es weder in Längsrichtung 8 noch in Vertikalrichtung 9 bewegt werden.

Die Klemmvorrichtung weist einen Klemmbolzen 6 auf, der mit einer Zuspannvorrrichtung 7 zusammenwirkt, um die beiden Klemmbacken 2, 3 aufeinander zu zu bewegen, so dass diese das Mantelrohr 1 zwischen sich fest einklemmen. Zwischen dem Mantelrohr 1 und dem Träger 4 ist eine Energieabsorptionsvorrichtung 26 vorgesehen, welche mit der Zuspannvorrichtung 7 so zusammenwirkt, dass in geöffneter Klemmvorrichtung ein Kraftfluss durch die Energieabsorptionsvorrichtung 26 hindurch unterbrochen ist, so dass eine Verstellung des Mantelrohrs 1 erfolgen kann und bei geschlossener Klemmvorrichtung ein Kraftfluss gegeben ist, so dass im Fall eines Fahrzeugsfrontalaufpralls das Mantelrohr 1 gegenüber dem Trägers 4 unter Energieabsorption, beispielsweise durch Deformation eines Biegedrahts, verlagerbar ist.

Der Klemmbolzen 6 verbindet die beiden Klemmbacken 2, 3 und ist an seinem einen Ende 13 mit einem Betätigungshebel 10 verbunden, der um die Bolzenachse 19 drehbar ist. Ein anderes Ende des Klemmbolzens 6 ist an dem Klemmbacken 2 mittels einer Mutter 12 verschraubt. Der Betätigungshebel 10 wirkt zusammen mit dem Klemmbolzen 6 auf eine Zuspannvorrichtung 7 derart ein, dass bei einer Drehung des Betätigungshebels 10 in Schließrichtung 14 um die Bolzenachse 19 die beiden Klemmbacken 2, 3 das Mantelrohr 1 fest einklemmen, und dass bei einer Drehung des Betätigungshebel 10 in Öffungsrichtung 15 (entgegen der Zuspann- oder Schließrichtung) die Klemmbacken 2, 3 das Mantelrohr 1 für die Lenksäulenverstellung in Längsrichtung 8 und in Vertikalrichtung 9 freigeben.

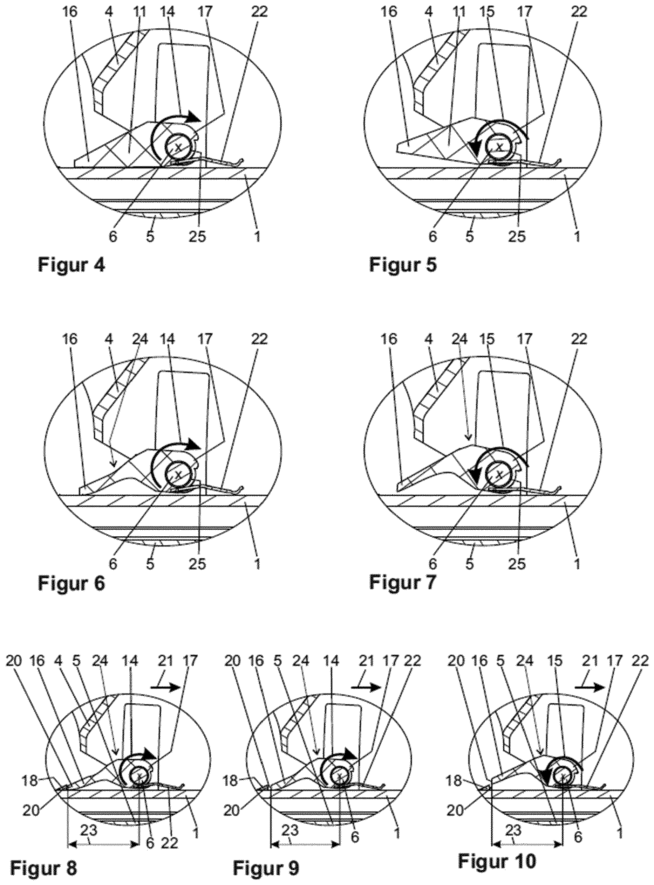

Die Figuren 4 und 5 zeigen einen erfindungsgemäßen Dämpfungskörper 11 in einer ersten Ausführungsform. Der Dämpfungskörper 11 besitzt eine durchgehende Bohrung 25, durch die der Klemmbolzen 6 hindurch geht. Dabei ist der Durchmesser der Bohrung 25 und der Außendurchmesser des Klemmbolzens 6 dermaßen aufeinander abgestimmt, dass sich eine Klemmverbindung ergibt und der Klemmbolzen 6 reibschlüssig mit dem Dämpfungskörper 11 verbunden ist. Der Dämpfungskörper 11 besitzt eine radial vom Klemmbolzen 6 abstehende Anschlagzunge 16, die bei einer Drehung des Klemmbolzens 6 in Öffnungsrichtung 15 in Anlage mit dem Mantelrohr 1 kommt, wobei die Drehbewegung des Dämpfungskörpers 11 gestoppt wird. Wenn sich jetzt der Klemmbolzen 6 weiter in Öffnungsrichtung 15 dreht, reibt seine Umfangsfläche an der Innenfläche der Bohrung 25 des Dämpfungskörpers 11. Die Drehbewegung des Klemmbolzens 6 muss also die Reibkraft überwinden, wobei die Bewegungsenergie des Klemmbolzens 6 und des damit verbundenen Betätigungshebels 10 absorbiert wird. Dies führt zu einer Dämpfung der Drehbewegung.

Ein Federelement 22 ist am Dämpfungskörper 11 und im übrigen auch an dem modifizierten Dämpfungskörper 24 gemäß einer weiter unten beschriebenen Ausführungsform der Erfindung befestigt. Das Federelement 22 steht radial vom Klemmbolzen 6 ab und zwar in entgegengesetzter Richtung wie die Anschlagzunge 16 des Dämpfungskörpers 11. Das Federelement 22 liegt auch am Mantelrohr 1 an und verhindert auf diese Weise eine größere Drehbewegung des Dämpfungskörpers 11, 24, wenn sich der Klemmbolzen 6 in Schließrichtung 14 dreht. Wie man in den Figuren 5, 7 und 10 erkennt, hebt sich das freie Ende der Anschlagzunge 16 dabei lediglich um wenige Millimeter vom Mantelrohr 1 ab.

Wie man in den Figuren 6 und 7 erkennt, besitzt ein modifizierter Dämpfungskörper 24 ebenfalls eine Anschlagzunge 16, die jedoch mit relativ geringer Materialstärke ausgeführt ist, sodass sie elastisch verbiegbar ist. Die Anschlagzunge 16 ist vom Klemmbolzen 6 ausgehend in Richtung auf das Mantelrohr 1 hin gebogen. Wenn sich der Klemmbolzen 6 in Öffnungsrichtung 15 dreht, kommt das Ende der Anschlagzunge 16 in Anlage an das Mantelrohr 1 (Figur 6). Dreht sich der Klemmbolzen 6 jetzt noch weiter in Öffnungsrichtung 15, so wird die Anschlagzunge 16 elastisch verformt. Dadurch wird ein Teil der Dreh- und Bewegungsenergie des Klemmbolzens 6 und des Betätigungshebels 10, die wiederum aus der elastischen Rückverformung der Klemmbacken 2, 3 stammt, zur Verformung der Anschlagzunge 16verwendet, wodurch die Bewegung des Klemmbolzen 6 und des Betätigungshebels 10 gedämpft wird.

In einer alternativen Ausführungsform, die hier nicht im Detail dargestellt ist, kann ein den Klemmbolzen 6 umschließender Bereich 17. Dämpfungskörpers 24, der selbst verständlich nicht vollkommen geschlossen sein darf, durch Aufweiten elastisch verformt werden, beispielsweise durch einen nicht gezeigten Nocken des Klemmbolzen 6. Auch dabei würde ein Teil der Bewegungsenergie des Klemmbolzen 6 und des Betätigungshebels 10 durch die elastische Verformung des Bereichs 17 verwendet und die Bewegung gedämpft werden.

Eine in den Figuren 8 bis 10 dargestellte bevorzugte Ausführungsform der Erfindung sieht einen Längsanschlag 18 vor, der auf dem Mantelrohr 1 befestigt ist. Die Anschlagzunge 16 des Dämpfungskörpers 24 weist an ihrem freien Ende eine Anschlagfläche 20 auf, die zum Anschlag an den Längsanschlag 18 des Mantelrohrs 1 bestimmt ist. Wenn die Zuspannvorrichtung 7 wie in Figur 8 gezeigt geöffnet ist, liegt die Anschlagfläche 20 der Anschlagzunge 16 im allgemeinen in einem größeren Abstand vom Längsanschlag 18 des Mantelrohrs 1. Verstellt der Fahrer jetzt die Lenksäule in Richtung 21 zur Fahrzeugfront hin, so verschiebt sich der Längsanschlag 18 zusammen mit dem Mantelrohr 1 in Richtung 21, bis er an der Anschlagfläche 20 der Anschlagzunge 16 anschlägt und eine weitere Verschiebung des Mantelrohr 1 in Richtung 21 zur Fahrzeugfront hin verhindert.

Wenn hingegen wie in Figur 10 gezeigt die Zuspannvorrichtung 7 geschlossen und verriegelt ist, steht die Anschlagzunge 16 einige Millimeter vom Mantelrohr 1 entfernt oberhalb des Längsanschlag 18 und damit außerhalb des Wirkbereichs des Lenkanschlags 18. Kommt es in dieser Situation zu einem Fahrzeugunfall, so kann sich das Mantelrohr 1 weiter in Richtung 21 zur Fahrzeugfront hin bewegen, ohne dass sein Längsanschlag 18 mit der Anschlagfläche 20 der Anschlagzunge 16 in Kontakt kommt. Das Mantelrohr 1 ist also nach Überwindung der Reibungskraft der Klemmbacken 2, 3 in Richtung 21 über den Längsanschlag 18 hinaus verschiebbar, wobei die Energieabsorptionsvorrichtung 26 zum Einsatz kommen kann, um die Aufprallenergie, die durch den Fahrer in das Lenkrad eingetragen wird, gezielt durch die Deformation des Energieabsorptionselements kontrolliert in Verformungsarbeit umzuwandeln. Dies ist ein wichtiger Sicherheitsaspekt, weil hierdurch verhindert wird, dass die Lenksäule und das Lenkrad crashbedingt in Richtung Fahrer verschoben wird.

Die Feder 22 sorgt bei dieser Ausführungsform dafür, dass der Dämpfungskörper 24 sich soweit in Schließrichtung 14 drehen kann, bis das Ende seiner Anschlagzunge 16 aus dem Wirkbereich des Längsanschlags 18 des Mantelrohrs 1 herausgehoben wird.

In Figur 9 ist eine Zwischenstellung zwischen der in Figur 8 gezeigten vollständigen Öffnung der Zuspannvorrichtung 7 und der in Figur 10 gezeigten vollständigen Schließung dargestellt. Hier erkennt man, dass infolge der weiter oben beschriebenen Elastizität der Anschlagzunge 16 die Anschlagfläche 20 im teilweise geschlossenen Zustand der Zuspannvorrichtung 7 einen geringfügigen Abstand (Spalt) zum Längsanschlag 18 des Mantelrohrs 1 aufweist. Dreht man den Klemmbolzen 6 aus der in Figur 9 gezeigten Zwischenstellung in die vollständig geöffnete Stellung von Figur 8, verformt sich die Anschlagzunge 16, indem sie aufgebogen wird. Dabei vergrößert sich der Abstand 23 zwischen der Bolzenachse 19 und dem Längsanschlag 18, sodass sich der Spalt zwischen Anschlagfläche 20 der Anschlagzunge 16 und dem Längsanschlag 18 des Mantelrohrs 1 schließt.

Der Spalt ist wichtig für den Fall, dass im geöffneten Zustand der Zuspannvorrichtung 7 gemäß Figur 8 die Lenksäule und damit das Mantelrohr 1 bis zur Anlage des Längsanschlag 1 an der Anschlagfläche 20 verstellt wird. Wenn nun die Anschlagzunge 16 beim Schließen der Zuspannvorrichtung 7 nicht elastisch rückverformt würde, könnte der genannte Spalt nicht entstehen. Vielmehr würde sich die Anschlagzunge 16 unter Umständen gegen eine zwischen der Anschlagfläche 20 und dem Längsanschlag 18 auftretenden Reibungskraft in Schließrichtung 14, d.h. nach oben bewegen. Wird anschließend die Zuspannvorrichtung 7 wieder geöffnet, könnte es vorkommen, dass das Ende der Anschlagzunge 16 auf der Oberseite des Längsanschlags 18 zu liegen kommt und die Anschlagfläche 20 nicht am Längsanschlag 18 anschlagen könnte. Dann wäre aber auch im geöffneten Zustand der Zuspannvorrichtung 7 keine Begrenzung der Längsbewegung des Mantelrohrs 1 in Richtung 21 zur Fahrzeugfront hin gegeben und die Lenksäule würde in einen unzulässigen Bereich hinein verstellbar sein.

Dies zu vermeiden ist die Anschlagzunge 16 des Dämpfungskörpers 24 elastisch ausgestaltet.

### BEZUGSZEICHENLISTE

- 1: Mantelrohr
- 2: Klemmbacken
- 3: Klemmbacken
- 4: Träger
- 5: Lenkspindel
- 6: Klemmbolzen
- 7: Zuspannvorrichtung
- 8: Längsrichtung
- 9: Vertikalrichtung
- 10: Betätigungshebel
- 11: Dämpfungskörper
- 12: Mutter
- 13: Ende
- 14: Schließrichtung
- 15: Öffnungsrichtung
- 16: Anschlagzunge
- 17: Bereich
- 18: Längsanschlag
- 19: Bolzenachse
- 20: Anschlagfläche
- 21: Richtung / Längsverschiebung
- 22: Federelement
- 23: Abstand
- 24: Dämpfungskörper
- 25: Bohrung

## Patentansprüche

1. Klemmvorrichtung einer verstellbaren Lenksäule für Kraftfahrzeuge, bei der ein mit dem Fahrzeugchassis fest verbundener Träger (4) mit zwei die Lenksäule umfassenden Klemmbacken (2, 3) verbunden ist, zwischen denen ein längs und/oder vertikal verstellbares, eine Lenkspindel (5) drehbar lagerndes Mantelrohr (1) der Lenksäule festklemmbar ist, mit einem die beiden Klemmbacken (2, 3) verbindenden Klemmbolzen (6), der mit einer an mindestens einem der beiden Klemmbacken (2, 3) angeordneten Zuspannvorrichtung (7) derart zusammenwirkt, dass bei einer Drehung des Klemmbolzens (6) um die Bolzenachse (19) in Schließrichtung (14) die Zuspannvorrichtung (7) das Mantelrohr (1) zwischen den beiden Klemmbacken (2, 3) einklemmt und bei einer Drehung in Öffnungsrichtung (15) die Klemmbacken (2, 3) freigibt, sodass das Mantelrohr (1) verstellbar ist, **dadurch gekennzeichnet, dass** auf dem Klemmbolzen (6) ein Dämpfungskörper (11, 24) angeordnet und mit dem Klemmbolzen (6) reibschlüssig oder elastisch verbunden ist und dass der Dämpfungskörper (11, 24) eine radial vom Klemmbolzen (6) abstehende Anschlagzunge (16) aufweist, die bei einer Drehung des Klemmbolzens (6) in Öffnungsrichtung (15) in Anlage mit dem Mantelrohr (1) oder einem anderen Teil der Lenksäule kommt und eine Drehung des Dämpfungskörpers (11, 24) verhindert, sodass die Drehung des Klemmbolzens (6) in Öffnungsrichtung (15) gegen die Reibkraft oder elastische Kraft erfolgt und gedämpft wird.

2. Klemmvorrichtung nach Anspruch 1, **dadurch gekennzeichnet, dass** die elastische Verbindung zwischen Dämpfungskörper (11, 24) und Klemmbolzen (6) durch eine elastische Verformung des Dämpfungskörpers (11) zustande kommt.

3. Klemmvorrichtung nach Anspruch 2, **dadurch gekennzeichnet, dass** die elastische Verformung eine Verformung der Anschlagzunge (16) ist.

4. Klemmvorrichtung nach Anspruch 2, **dadurch gekennzeichnet, dass** die elastische Verformung durch Aufweiten eines den Klemmbolzen (6) teilweise umschließenden Bereichs (17) des Dämpfungskörpers (11, 24) durch einen Nocken des Klemmbolzens (6) erzielt wird.

5. Klemmvorrichtung nach einem der vorhergehenden Ansprüche, **dadurch gekennzeichnet, dass** das Mantelrohr (1) mit einem festen Längsanschlag (18) versehen ist und dass der Dämpfungskörper (24) am Ende seiner Anschlagzunge (16) eine Anschlagfläche (20) aufweist, die bei geöffneter Spannvorrichtung (7) dem Längsanschlag (18) gegenüber liegt, sodass eine Längsverschiebung (21) des Mantelrohrs (1) zur Fahrzeugfront hin durch Anschlag der Anschlagfläche (20) am Längsanschlag (18) begrenzt ist, und die bei geschlossener Zuspannvorrichtung (7) oberhalb des Längsanschlags (18) liegt, sodass bei einem Unfall des Kraftfahrzeugs das Mantelrohr (1) unter Überwindung der Reibungskraft der Klemmbacken (2, 3) in Richtung (21) der Fahrzeugfront über den Längsanschlag (18) hinaus verschiebbar ist.

6. Klemmvorrichtung nach Anspruch 5, **dadurch gekennzeichnet, dass** der Dämpfungskörper (11) ein Federelement (22) aufweist, welches vom Klemmbolzen (6) radial in einer der Anschlagzunge (16) entgegengesetzten Richtung absteht und an dem Mantelrohr (1) oder einem anderen Teil der Lenksäule anliegt, sodass bei einer Drehung des Klemmbolzens (6) in Schließrichtung (14) die Drehbewegung des Dämpfungskörpers (24) begrenzt ist, sodass die Anschlagfläche (20) der Anschlagzunge (16) außerhalb des Wirkbereichs des Längsanschlags (18) liegt.

7. Klemmvorrichtung nach Anspruch 5 oder 6, **dadurch gekennzeichnet, dass** die elastische Deformation des Dämpfungskörpers (24) eine Vergrößerung des Abstandes (23) zwischen Bolzenachse (19) und Anschlagfläche (20) der Anschlagzunge (16) bewirkt.

8. Klemmvorrichtung nach Anspruch 7, **dadurch gekennzeichnet, dass** die Anschlagzunge (16) vom Bereich des Klemmbolzens (6) ausgehend in Richtung auf das Mantelrohr (1) hin gebogen ist und dass bei Anlage der Anschlagzunge (16) am Mantelrohr (1) und weiterer Drehung des Klemmbolzens (6) in Öffnungsrichtung (15) die Anschlagzunge (16) aufgebogen wird, sodass sich der Abstand (23) der Anschlagfläche (20) von der Bolzenachse (19) vergrößert.

## Claims

1. Clamping device of an adjustable steering column for motor vehicles, in which a carrier (4) which is securely connected to the vehicle chassis is connected to two clamping jaws (2, 3) which surround the steering column and between which a steering column tube (1) of the steering column which can be longitudinally and/or vertically adjusted and which rotatably supports a steering spindle (5) can be securely clamped, having a clamping pin (6) which connects the two clamping jaws (2, 3) and which cooperates with a clamping retention device (7) which is arranged on at least one of the two clamping jaws (2, 3) in such a manner that, in the event of a rotation of the clamping pin (6) about the pin axis (19) in the closure direction (14), the clamping retention device (7) clamps the steering column tube (1) between the two clamping jaws (2, 3) and, in the event of a rotation in the opening direction (15), releases the clamping jaws (2, 3) so that the steering column tube (1) can be adjusted, **characterized in that** a damping member (11, 24) is arranged on the clamping pin (6) and is connected to the clamping pin (6) in a frictionally engaging or resilient manner and **in that** the damping member (11, 24) comprises a stop tongue (16) which protrudes radially from the clamping pin (6) and which, when the clamping pin (6) is rotated in an opening direction (15), moves into abutment with the steering column tube (1) or another component of the steering column and prevents a rotation of the damping member (11, 24) so that the rotation of the clamping pin (6) in an opening direction (15) is carried out counter to the friction force or resilient force and is damped.

2. Clamping device according to Claim 1, **characterized in that** the resilient connection between the damping member (11, 24) and clamping pin (6) is produced by means of a resilient deformation of the damping member (11).

3. Clamping device according to Claim 2, **characterized in that** the resilient deformation is a deformation of the stop tongue (16).

4. Clamping device according to Claim 2, **characterized in that** the resilient deformation is achieved by expanding a region (17) of the damping member (11, 24) partially surrounding the clamping pin (6) by means of a cam of the clamping pin (6).

5. Clamping device according to one of the preceding claims, **characterized in that** the steering column tube (1) is provided with a fixed longitudinal stop (18) and **in that** the damping member (24) comprises at the end of the stop tongue (16) thereof a stop face (20) which, when the clamping retention device (7) is open, is opposite the longitudinal stop (18) so that a longitudinal displacement (21) of the steering column tube (1) toward the vehicle front is limited by the stop face (20) stopping against the longitudinal stop (18) and which, when the clamping retention device (7) is closed, is located above the longitudinal stop (18) so that, in the event of an accident of the motor vehicle, the steering column tube (1) can with the friction force of the clamping jaws (2, 3) being overcome be displaced in the direction (21) of the vehicle front beyond the longitudinal stop (18).

6. Clamping device according to Claim 5, **characterized in that** the damping member (11) comprises a resilient element (22) which protrudes radially from the clamping pin (6) in a direction counter to the stop tongue (16) and lies against the steering column tube (1) or another component of the steering column so that, in the event of a rotation of the clamping pin (6) in the closure direction (14), the rotational movement of the damping member (24) is limited so that the stop face (20) of the stop tongue (16) is located outside the effective region of the longitudinal stop (18).

7. Clamping device according to Claim 5 or 6, **characterized in that** the resilient deformation of the damping member (24) brings about an increase of the spacing (23) between the pin axis (19) and stop face (20) of the stop tongue (16).

8. Clamping device according to Claim 7, **characterized in that** the stop tongue (16) is bent from the region of the clamping pin (6) in the direction toward the steering column tube (1) and **in that**, when the stop tongue (16) is in abutment with the steering column tube (1) and the clamping pin (6) is rotated further in the opening direction (15), the stop tongue (16) is bent up so that the spacing (23) of the stop face (20) from the pin axis (19) is increased.

## Revendications

1. Dispositif de blocage d'une colonne de direction réglable pour des véhicules automobiles, dans lequel un support (4) assemblé de façon fixe au châssis du véhicule est relié à deux mâchoires de blocage (2, 3) encadrant la colonne de direction, entre lesquelles un tube d'enveloppe (1) de la colonne de direction déplaçable longitudinalement et/ou verticalement et supportant de façon rotative un axe de direction (5) peut être bloqué, avec un boulon de blocage (6) reliant les deux mâchoires de blocage (2, 3), qui coopère avec un dispositif de serrage (7) disposé sur au moins une des deux mâchoires de blocage (2, 3), de telle manière que, lors d'une rotation du boulon de blocage (6) autour de l'axe de boulon (19) dans le sens de la fermeture (14) le dispositif de serrage (7) bloque le tube d'enveloppe (1) entre les deux mâchoires de blocage (2, 3) et lors d'une rotation dans le sens de l'ouverture (15) libère les deux mâchoires de blocage (2, 3), de telle manière que le tube d'enveloppe (1) soit déplaçable, **caractérisé en ce qu'**un corps d'amortissement (11, 24) est disposé sur le boulon de blocage (6) et est assemblé par friction ou élastiquement au boulon de blocage (6) et **en ce que** le corps d'amortissement (11, 24) présente une languette de butée (16) saillante radialement sur le boulon de blocage (6), qui lors d'une rotation du boulon de blocage (6) dans le sens de l'ouverture (15) vient en appui sur le tube d'enveloppe (1) ou une autre partie de la colonne de direction et empêche une rotation du corps d'amortissement (11, 24), de telle manière que la rotation du boulon de blocage (6) dans le sens de l'ouverture (15) se fasse contre la force de friction ou la force élastique et soit amortie.

2. Dispositif de blocage selon la revendication 1, **caractérisé en ce que** la liaison élastique entre le corps d'amortissement (11, 24) et le boulon de blocage (6) se réalise par une déformation élastique du corps d'amortissement (11).

3. Dispositif de blocage selon la revendication 2, **caractérisé en ce que** la déformation élastique est une déformation de la languette de butée (16).

4. Dispositif de blocage selon la revendication 2, **caractérisé en ce que** la déformation élastique est produite par élargissement d'une région (17) du corps d'amortissement (11, 24) entourant au moins partiellement le boulon de blocage (6) par une came du boulon de blocage (6).

5. Dispositif de blocage selon l'une quelconque des revendications précédentes, **caractérisé en ce que** le tube d'enveloppe (1) est muni d'une butée longitudinale (18) fixe et **en ce que** le corps d'amortissement (24) présente à l'extrémité de sa languette de butée (16) une face de butée (20), qui lorsque le dispositif de serrage (7) est ouvert se trouve en face de la butée longitudinale (18), de telle manière qu'un déplacement longitudinal (21) du tube d'enveloppe (1) vers l'avant du véhicule soit limité par la butée de la face de butée (20) sur la butée longitudinale (18), et qui lorsque le dispositif de serrage (7) est fermé se trouve au-dessus de la butée longitudinale (18), de telle manière que lors d'un accident du véhicule automobile le tube d'enveloppe (1) puisse se déplacer au-delà de la butée longitudinale (18) en direction (21) de l'avant du véhicule en surmontant la force de friction des mâchoires de blocage (2, 3).

6. Dispositif de blocage selon la revendication 5, **caractérisé en ce que** le corps d'amortissement (11) présente un élément de ressort (22), qui est saillant radialement sur le boulon de blocage (6) dans une direction opposée à la languette de butée (16) et s'appuie sur le tube d'enveloppe (1) ou sur une autre partie de la colonne de direction, de telle manière que lors d'une rotation du boulon de blocage (6) dans le sens de la fermeture (14) le mouvement de rotation du corps d'amortissement (24) soit limité, de telle manière que la face de butée (20) de la languette de butée (16) soit située à l'extérieur de la zone d'action de la butée longitudinale (18).

7. Dispositif de blocage selon une revendication 5 ou 6, **caractérisé en ce que** la déformation élastique du corps d'amortissement (24) provoque une augmentation de la distance (23) entre l'axe de boulon (19) et la face de butée (20) de la languette de butée (16).

8. Dispositif de blocage selon la revendication 7, **caractérisé en ce que** la languette de butée (16) est courbée en direction du tube d'enveloppe (1) à partir de la région du boulon de blocage (6) et **en ce que**, lors de l'appui de la languette de butée (16) sur le tube d'enveloppe (1) et d'une nouvelle rotation du boulon de blocage (6) dans le sens de l'ouverture (15), la languette de butée (16) est incurvée, de telle manière que la distance (23) de la face de butée (20) à l'axe de boulon (19) augmente.
